# EUROPEAN PATENT SPECIFICATION

(11) **EP 4 169 623 B1**
(45) Date of publication and mention of the grant of the patent: **28.01.2026**
(21) Application number: 21898336.9
(22) Date of filing: 12.10.2021
(51) Int. Cl.: B05C 5/02, B05C 9/06, B05C 11/10, H01M 4/04, H01M 10/04

(54) **METHOD OF COATING A CURRENT COLLECTOR WITH A SLOT DIE COATER HAVING IMPROVED COATING SOLUTION FLOW**
VERFAHREN ZUM BESCHICHTEN EINES STROMKOLLEKTORS MIT EINEM SCHLITZDÜSENBESCHICHTER MIT VERBESSERTEM FLUSS DER BESCHICHTUNGSLÖSUNG
PROCEDE DE REVETEMENT D'UN COLLECTEUR DE COURANT AVEC UNE MACHINE DE REVETEMENT A FENTE PRESENTANT UN FLUX AMELIORE DE LA SOLUTION DE REVETEMENT

(30) Priority: 24.11.2020 KR 20200159175
(43) Date of publication of application: 26.04.2023
(73) Proprietor: LG Energy Solution, Ltd., Seoul 07335 (KR)
(72) Inventor: LEE, Taek-Soo, Daejeon 34122 (KR); JEON, Shin-Wook, Daejeon 34122 (KR); JO, Young-Joon, Daejeon 34122 (KR); CHO, Jin-Ho, Daejeon 34122 (KR); CHOY, Sang-Hoon, Daejeon 34122 (KR)
(74) Representative: Plasseraud IP
(86) International application number: PCT/KR2021/014047
(87) International publication number: WO 2022/114510

(56) References cited:
- JP-A- 2001 224 998
- JP-A- 2010 005 616
- KR-A- 20190 019 827
- KR-A- 20200 037 662
- US-A1- 2003 140 849

## Description

### TECHNICAL FIELD

The present disclosure relates to a method of coating a current collector with a slot die coater, and more particularly to a method of coating a current collector with a slot die coater that has improved a coating solution flow inside the slot die coater. The present application claims priority to Korean Patent Application No. 10-2020-0159175 filed on November 24, 2020 in the Republic of Korea.

### BACKGROUND ART

As technology development and demand for mobile devices increase, the demand for secondary batteries as an energy source is rapidly increasing, and such secondary batteries essentially include an electrode assembly which is a power generation element. The electrode assembly has a form in which a positive electrode, a separator, and a negative electrode are stacked at least once, and the positive electrode and the negative electrode are prepared by applying and drying a positive electrode active material slurry and a negative electrode active material slurry on a current collector made of aluminum foil and copper foil, respectively. In order to equalize charging/discharging features of secondary batteries, the positive electrode active material slurry and the negative electrode active material slurry should be uniformly coated on the current collector, and a slot die coater is conventionally used.

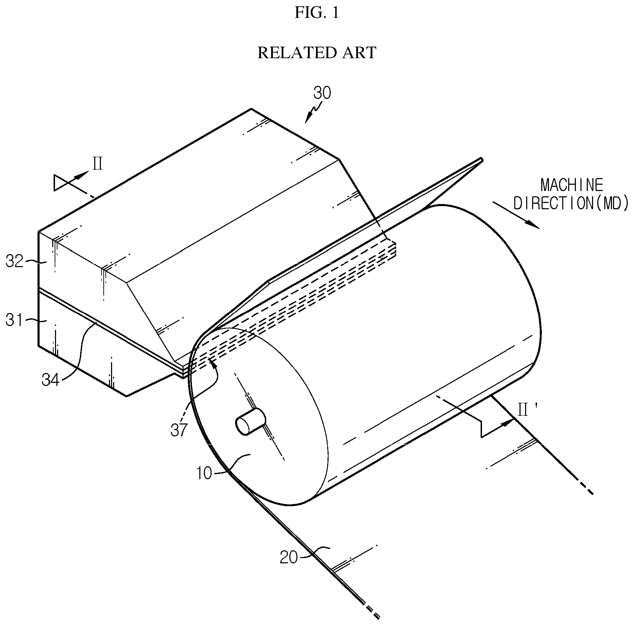

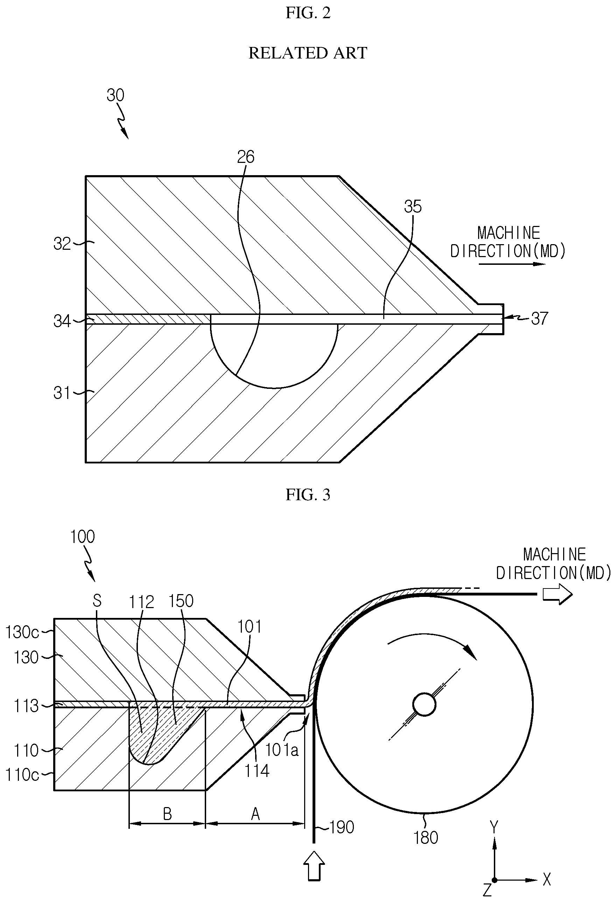

FIG. 1 shows an example of a coating method using a conventional slot die coater. FIG. 2 is a cross-sectional view of the slot die coater taken along II-II' of FIG. 1 along a machine direction (MD) (a traveling direction of a current collector).

Referring to FIGS. 1 and 2, in an electrode manufacturing method using a slot die coater 30, an electrode active material slurry which is a coating solution discharged from the slot die coater 30 is applied on an current collector 20 transferred by a coating roll 10. The electrode active material slurry discharged from the slot die coater 30 is widely applied on one surface of the current collector 20 to form an electrode active material layer. The slot die coater 30 includes two die blocks 31 and 32 and forms a slot 35 by interposing a shim plate 34 between the two die blocks 31 and 32, and may form the electrode active material layer by discharging an electrode active material slurry through a discharge port 37 communicatively connected to the slot 35.

Referring to FIG. 2, the inner shape of the slot die coater 30 may be seen. Reference numeral 26 denotes a manifold in which the electrode active material slurry, which is a coating solution, is contained. The manifold 26 is connected to an externally installed electrode active material slurry supply chamber (not shown) through a supply pipe to receive the electrode active material slurry. The principle is that when the electrode active material slurry is fully filled in the manifold 26, the flow of the electrode active material slurry is induced along the slot 35 and discharged to the outside through the discharge port 37.

The shape of the die blocks 31 and 32, in particular, the internal design including the manifold 26, is a major factor in determining a flux uniformity in a width direction. A high flux uniformity means a small flow rate deviation. The electrode active material slurry is a non-Newtonian fluid having a viscosity of several thousand to tens of thousands of cps, and the flow rate deviation in the width direction during coating is large. The flow rate deviation leads to a loading deviation. There are items required according to the development of the secondary battery industry. Among the items, a large coating width is required for high productivity, which inevitably accompanies a large loading deviation. In addition, since rheological properties of the electrode active material slurry of materials developed to satisfy required characteristics such as high capacity, high output, and low cost are gradually increasing the flow rate deviation in the width direction, design for this part is very important.

Currently, the slot die coater 30 is designed with the concept of minimizing the flow rate deviation, but a flow rate distribution occurs in the flow of the electrode active material slurry inside the slot die coater 30, in particular, in the manifold 26, and the electrode active material slurry which undergoes a relatively long stagnation is deformed in an environment to which a pressure of tens to hundreds of kPA is applied to easily form an aggregate. The formation of such an aggregate may not only deform a flow path inside the die blocks 31 and 32 to increase the flow rate deviation, but also block the discharge port 37 or the aggregates are discharged onto the current collector 20 to cause a coating defect that a coating surface becomes uneven and non-uniform.

Therefore, improvements in these parts should be reflected to the inside of the die blocks 31 and 32. However, in the current slot die coater field, such a design is not reviewed at a high level and thus is not reflected, and the problem such as the formation of the aggregate is dealt with by increasing the number of times of washing. The increasing of number of times of washing causes a decrease in production utilization, and in particular, as the demand for secondary batteries has recently expanded to secondary batteries for vehicle, stable long-term production is becoming important, and thus there is a great need for a fundamental solution capable of minimizing a relative stagnation of the electrode active material slurry inside the slot die coater.

US 2003/140849 A1 and JP 2010 005616 A disclose die coaters.

### DISCLOSURE

### Technical Problem

The present disclosure is designed to solve the problems of the related art, and therefore the present disclosure is directed to providing a method of coating a current collector with a slot die coater with a uniform flow of a coating solution without stagnation.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

The invention is as defined by the claims.

In one aspect of the present invention, there is provided a slot die coater including at least two die blocks; a shim plate provided between the two die blocks to form a slot; and a manifold provided in the die block and communicatively connected with the slot as a chamber in the shape of indention accommodating a coating solution, wherein the coating solution is discharged and applied to a surface of a continuously traveling substrate through a discharge port communicatively connected with the slot, and a ratio B/S of a manifold length B (mm) to a manifold cross-sectional area S (cm²) in a cross section along a traveling direction of the substrate is in a range of 1.9 to 9.8.

A die block size which is a length from a die lip which is a front end of the die block to a rear surface of the die block may be equal to or less than 350 mm.

The ratio B/S of the manifold length B to the manifold cross-sectional area S may be determined such that a flow rate deviation which is a difference between maximum and minimum values of a flow rate measured along a width direction of the slot die coater is less than 20% and an average residence time is equal to or less than 200 seconds.

**In** another aspect of the present invention, there is provided a slot die coater including a lower die block; an intermediate die block disposed on an upper portion of the lower die block to form a lower slot therebetween; and an upper die block disposed on an upper portion of the intermediate die block to form an upper slot therebetween, a first manifold provided in the lower die block and communicatively connected with the lower slot as a chamber in the shape of indention accommodating a first coating solution; and a second manifold provided in the intermediate die block and communicatively connected with the upper slot as a chamber in the shape of indention accommodating a second coating solution, wherein the coating solution is discharged and applied to a surface of a continuously traveling substrate through a discharge port communicatively connected with the slot, and, in a cross section perpendicular to a width direction of the slot die coater, a ratio B'/S' of a first manifold length B' (mm) to a first manifold cross-sectional area S' (cm²) is in a range of 1.9 to 9.8 or a ratio B"/S" of a second manifold length B" (mm) to a second manifold cross-sectional area S" (cm²) is in a range of 1.9 to 9.8.

The ratio B'/S' of the first manifold length B' (mm) to the first manifold cross-sectional area S' (cm²) or the ratio B"/S" of the second manifold length B" (mm) to the second manifold cross-sectional area S" (cm²) may be determined such that a flow rate deviation which is a difference between maximum and minimum values of a flow rate measured along the width direction of the slot die coater is less than 20% and an average residence time is equal to or less than 200 seconds.

The slot die coater may be configured to discharge and apply an electrode active material slurry to a surface of a continuously traveling substrate through at least one of the lower slot and the upper slot, a direction in which the electrode active material slurry may be discharged lies almost horizontally such that the slot die coater is installed, and surfaces of the lower die block, the intermediate die block, and the upper die block opposite to the direction in which the electrode active material slurry is discharged may lie almost vertically.

A tangential plane of the intermediate die block and the upper die block may be parallel to a horizontal plane.

The lower slot and the upper slot may form an angle of 30 to 60 degrees.

The slot die coater may be configured to discharge and apply an electrode active material slurry to a surface of a continuously traveling substrate through at least one of the lower slot and the upper slot, and may further include a lower shim plate configured to define the lower slot; and an upper shim plate configured to define the upper slot, wherein each of the lower shim plate and the upper shim plate includes an open portion by cutting one region thereof such that a coating width of an electrode active material layer formed on the substrate is determined, and the lower shim plate and the upper shim plate are aligned with each other in up and down direction.

The intermediate die block may include a first intermediate die block and a second intermediate die block, and the first intermediate die block and the second intermediate die block may be in face-to-face contact with each other up and down and sliding along a contact surface to be movable relative to each other.

The first intermediate die block may be fixedly coupled to the lower die block by bolt coupling, and the second intermediate die block may be fixedly coupled to the upper die block by bolt coupling such that the first intermediate die block and the lower die block move integrally, and the second intermediate die block and the upper die block move integrally.

A step may be formed between the lower discharge port and the upper discharge port.

According to other example, the slot die coater may be configured to discharge and apply an electrode active material slurry to a surface of a continuously traveling substrate through at least one of the lower slot and the upper slot, and a direction in which the electrode active material slurry is discharged may be a direction opposite to gravity.

### Advantageous Effects

According to the present disclosure, a flow of the electrode active material slurry, which is a coating solution, is uniform inside the slot die coater. A time for which the electrode active material slurry is stagnant in any part of the manifold and the slot may be reduced, and thus agglomeration of the electrode active material slurry is prevented. As a result, there is no problem in that a flow rate deviation in the width direction occurs due to deformation of the flow, or the agglomerated electrode active material slurry lump blocks the discharge port.

Therefore, when the slot die coater of the present disclosure is used for coating the electrode active material slurry, the electrode active material slurry flow is uniform without stagnation, and thus the slot die coater may be easy for long-time coating and have excellent productivity. There is no agglomeration of the electrode active material slurry, and thus it is possible to prevent the occurrence of a defect on the coating surface. Therefore, it is possible to improve the coating quality of a product.

According to the present disclosure, a ratio of the manifold length to the manifold cross-sectional area has a value within a predetermined range, and thus the die block with the reduced flow rate deviation is provided. Instead of removing the aggregate by increasing the number of times of washing as in the prior art, it is possible to fundamentally prevent the occurrence of the aggregate, and thus the slot die coater may be easy for long-time coating and have excellent productivity.

The slot die coater according to the present disclosure may form the coating layer, in particular, the electrode active material layer, uniformly at a desired thickness with a uniform loading amount, as a result of the reduced flow rate deviation, and preferably may also be manufactured as a dual slot die coater capable of simultaneously coating two types of electrode active material slurries, and thus both performance and productivity are excellent. When the slot die coater of the present disclosure is used to manufacture an electrode of a secondary battery by applying the electrode active material slurry on the current collector while driving the current collector, there is an advantage that uniform application is possible even under high-speed traveling or long-width application conditions.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic diagram showing an example of using a slot die coater according to the conventional art.
FIG. 2 is a cross-sectional view taken along II-II' of FIG. 1.
FIG. 3 is a cross-sectional view of a slot die coater according to an embodiment of the present disclosure.
FIG. 4 is a schematic exploded perspective view of a slot die coater according to an embodiment of the present disclosure.
FIG. 5 is a schematic cross-sectional view of a slot die coater according to another embodiment of the present disclosure.
FIG. 6 is a schematic exploded perspective view of a slot die coater according to another embodiment of the present disclosure.

### MODE FOR DISCLOSURE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

The slot die coater of the present disclosure may include one or more slots. When slot die coater includes two slots, the two slots may include a lower slot and an upper slot and coating a coating solution in a double layer on a substrate. The 'substrate' described below is a current collector and the coating solution is an 'electrode active material slurry'. All coating solutions discharged through the slots are electrode active material slurries, and may discharge electrode active material slurries that have the same or different composition (types of an active material, a conductive material, and a binder), content (an amount of each of the active material, the conductive material, and the binder), or physical properties through each slot. In particular, the dual slot die coater including the two slots according to the present disclosure is optimized for electrodes manufactured by applying at least two types of electrode active material slurries at the same time, or by applying at least two types of electrode active material slurries in an alternating manner to perform pattern coating. However, the scope of the present disclosure is not necessarily limited thereto. For example, the substrate may be a porous scaffold constituting a separation membrane, and the coating solutions may be organic matters. That is, when thin film coating is required, any substrate and any coating solution may be good.

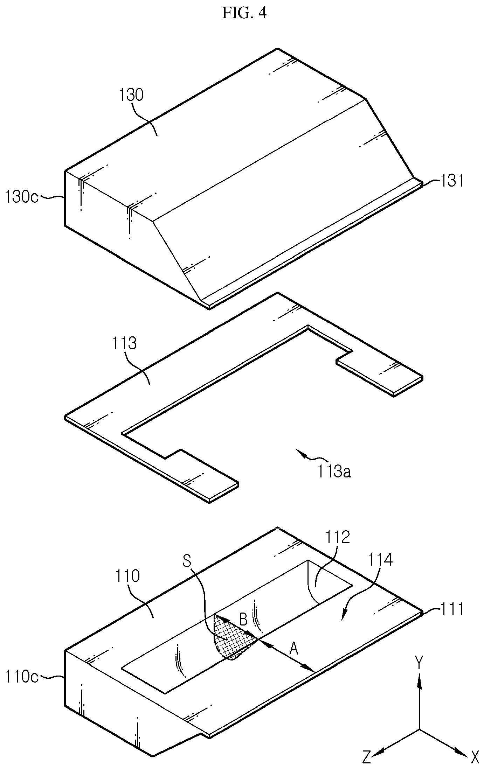

FIG. 3 is a cross-sectional view of a slot die coater according to an embodiment of the present disclosure. FIG. 4 is a schematic exploded perspective view of a slot die coater according to an embodiment of the present disclosure.

**Referring** to FIGS. 3 and 4, the slot die coater 100 includes two die blocks 110 and 130. A shim plate 113 for forming a slot 101 is provided between the die blocks 110 and 130. The die blocks 110 and 130 are assembled to each other through a fastening member (not shown) such as a bolt. In the illustrated example, there are two die blocks. There may be two or more die blocks.

In FIG. 3, the slot die coater 100 is installed in a substantially horizontal direction (X direction) in which an electrode active material slurry which is a coating solution is discharged (approximately: ± 5 degrees). However, the slot die coater 100 is not limited to the example form here. For example, the slot die coater 100 may be configured as a vertical die that discharges the electrode active material slurry in a direction opposite to gravity with a direction in which the electrode active material slurry is discharged upward (Y direction).

The slot 101 is formed between where the die blocks 110 and 130 face each other. The shim plate 113 is provided between the die blocks 110 and 130 to provide a gap between the die blocks 110 and 130 so that the slot 101 corresponding to a passage through which the coating solution 150 may flow is formed. A thickness of the shim plate 113 determines a vertical width (Y direction and a slot gap) of the slot 10.

The shim plate 113 may include an open portion 113a by cutting one region thereof and may be interposed in the remaining parts except for one side of an edge region of an opposite surface of each of the die blocks 110 and 130. Accordingly, a discharge port 101a through which the coating solution150 may be discharged to the outside is formed between a dielips 111 and 131, which are fore ends of the die blocks 110 and 130, respectively. The discharge port 101a may be formed when the dielips 111 and 131 are spaced apart from each other.

The shim plate 113 functions as a gasket to prevent the coating solution 150 from leaking into the gap between the die blocks 110 and 130, except for a region where the discharge port 101a is formed, and thus the shim plate 113 is preferably made of a material having a sealing property.

Any one of the die blocks 110 and 130 includes a manifold 112 having a predetermined depth and communicatively connected with the slot 101. In the present embodiment, an example in which the manifold 112 is provided by indenting inward from the upper surface of the die block 110 at the bottom is shown. The manifold 112 is a chamber in the shape of indention accommodating the coating solution 150. A region of the die block 110 from a front end of the manifold 112 to the die lip 111 is a land 114. The manifold 112 is connected to a coating solution supply chamber (not shown) installed outside through a supply pipe to receive the coating solution 150. When the coating solution 150 is fully filled in the manifold 112, the flow of the coating solution 150 is induced along the slot 101 and discharged to the outside through the discharge port 101a.

According to the slot die coater 100 having such a configuration, a rotatably provided coating roll 180 is disposed in front of the slot die coater 100, the substrate 190 to be coated by rotating a coating roll 180 is driven, the coating solution 150 may be applied on the substrate 190 by discharging and continuously contacting the coating solution 150 with the surface of the substrate 190. Alternatively, supply and interruption of the coating solution 150 may be alternately performed so that pattern-coating may be intermittently performed on the substrate 190.

The coating solution 150 needs to have a uniform flow in the manifold 112 to have excellent coating quality. When there is a region in which the electrode active material slurry, which is the coating solution 150, is stagnant or moves at a slow speed in the manifold 112, in case of long time use, the electrode active material slurry aggregates inside the manifold 112 and causes deformation in the flow, resulting in a flow rate deviation in the width direction, or the coating surface may become non-uniform due to a phenomenon that agglomerated electrode active material slurry lump blocks the discharge port 101a, etc., resulting in a surface defect. Even if the agglomerated lump is discharged and applied on the substrate 190, such coating is defective. The flow rate deviation is a difference between the maximum value and the minimum value of flux measured along the width direction of the slot die coater 100.

In order to equalize the flow inside the slot die coater 100, that is, in the flow path including the manifold 112, it is preferable that a ratio B/S of a manifold length B (mm) and a manifold cross-sectional area S (cm²) is in the range of 1.9 to 9.8. The manifold 112 may be configured to elongate in the width direction of the slot die coater 100, and the length or cross-sectional area thereof may or may not be constant along the width direction. In any case, it is sufficient that the predetermined range value is satisfied only at any one cross-section, that is, at a point of any one position, along a traveling direction of the substrate 190. The die block size, which is the length from the die lips 111 and 131 to the rear surfaces 110c and 130c of the die blocks 110 and 130, may be equal to or less than 350 mm.

The manifold length B corresponds to a distance from the front to the rear end of the manifold 112 as seen from the upper surface of the die block 110, that is, an opened length in the uppermost cross-section of the manifold 112. Since the depth of the manifold 112 is determined in consideration of the thickness of the die block 110 and there is a lower limit, the manifold length B is a factor that greatly affects the volume of the manifold.

The present inventors have proposed a new parameter of the ratio B/S of the manifold length B and the manifold cross-sectional area S, and found that the flow of the coating solution inside the slot die coater 100 may be improved by adjusting the new parameter. Prior to the present disclosure, there is no technology for considering the fact that the manifold length and the manifold cross-sectional area affect an average residence time and a flow rate deviation, and there is no technology for improving the flow rate deviation through the fact. Therefore, the present disclosure does not relate to a simple dimensional change or optimization. In addition, since the flow rate deviation improvement effect is remarkable with respect to a range of the ratio B/S of the manifold length B to the manifold cross-sectional area S, there is a difficulty in the invention.

The present inventors confirmed that the average residence time (stagnant time) is gradually increased as the ratio B/S of the manifold length B to the manifold cross-sectional area S increases. In terms of flow uniformity, the shorter the average residence time, the better. In order to reduce the ratio B/S of the manifold length B to the manifold cross-sectional area S from the viewpoint of the average residence time, it is possible to fix a value of the manifold cross-sectional area S and reduce the manifold length B. In addition, it is also possible to fix the manifold length B and increase the manifold cross-sectional area S. It is also possible to further increase the manifold cross-sectional area S compared to the manifold length B while increasing the manifold length B.

However, in order to satisfy the required production and coating quality, the ratio B/S of the manifold length B to the manifold cross-sectional area S may not be reduced. The present inventors have found that when the ratio B/S of the manifold length B to the manifold cross-sectional area S is set within an appropriate range, the flow rate deviation in the width direction may be reduced to a desired level while the average residence time may be reduced, so that the required production and coating quality may be satisfied while the flow of the coating solution may be equalized.

The land length A indicates a distance from the die lip 111 to the front end of the manifold 112. The present inventors confirmed that when the manifold length B is fixed and the land length A is changed, the flow rate deviation tends to decrease as the land length A increases. At this time, the present inventors confirmed that when the manifold length B is further increased, the flow rate deviation is reduced even with the same land length A. The present inventors confirmed that the average residence time is reduced when the manifold length B is fixed and the land length A increases.

The present inventors confirmed that when the land length A is fixed and the manifold length B is changed, the flow rate deviation tends to decrease as the manifold length B increases. At this time, the present inventors confirmed that when the land length A further increases, the flow rate deviation is reduced even with the same manifold length B. The present inventors confirmed that the average residence time increases when the land length A is fixed and the manifold length B increases.

Considering the above results, the longer the land length A and the manifold length B, the more advantageous in terms of flow rate deviation. However, since the slot die coater 100 needs to be implemented within a limited space, the land length A and the manifold length B may not be increased indefinitely. The present inventors have found that, in various die blocks having the same land length A, in order to indicate the average residence time and flow rate deviation in which the coating solution flow may be uniform, a predetermined value is satisfied by using the ratio B/S of the manifold length B to the manifold cross-sectional area S as a parameter and controlling the parameter. It would be ideal if the average dwell time is shorter, but it is preferable that the average residence time is equal to or less than 200 seconds in consideration of the coating solution viscosity and coating speed in a current secondary battery electrode process. It would be ideal if the flow rate deviation is also smaller, but as long as the flow rate deviation is less than 20%, the flow rate deviation is considered an acceptable level and managed as a desirable flow rate deviation. The present inventors confirmed that if the ratio B/S of the manifold length B to the manifold cross-sectional area S is in the range of 1.9 to 9.8, the average residence time may be equal to or less than 200 seconds and the flow rate deviation may be less than 20%. As such, the present disclosure also provides the slot die coater including the die blocks having the ratio B/S of the manifold length B to the manifold cross-sectional area S such that the average residence time is equal to or less than 200 seconds and the flow rate deviation is less than 20%.

According to the present disclosure, the flow of the electrode active material slurry, which is the coating solution 150, inside the slot die coater 100 is uniform. Since the time for which the electrode active material slurry is stagnant in any part of the manifold 112 and the slot 101 is shortened, agglomeration of the electrode active material slurry is prevented. As a result, there is no problem of causing a deformation in the flow to cause the flow rate deviation in the width direction and a loading deviation therefrom, or causing a coating defect since an agglomerated electrode active material slurry lump blocks the discharge port 101a or is discharged on the substrate 190.

Therefore, when the slot die coater 100 of the present disclosure is used for coating the electrode active material slurry, the electrode active material slurry flow is uniform without stagnation, and thus the slot die coater may be easy for long-time coating and have excellent productivity. There is no agglomeration of the electrode active material slurry, and thus it is possible to prevent the occurrence of a defect on the coating surface. Therefore, it is possible to improve the coating quality of a product.

According to the present disclosure, the ratio B/S of the manifold length B to the manifold cross-sectional area S has a value within a predetermined range, and thus the die blocks 110 and 130 that have improved the coating solution flow is provided. Instead of removing the aggregate by increasing the number of times of washing as in the prior art, it is possible to fundamentally the occurrence of the aggregate, and thus the slot die coater 100 may be easy for long-time coating and have excellent productivity.

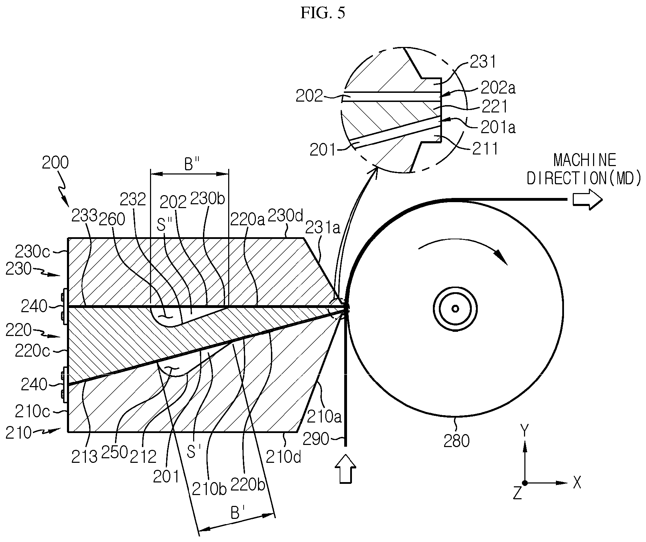

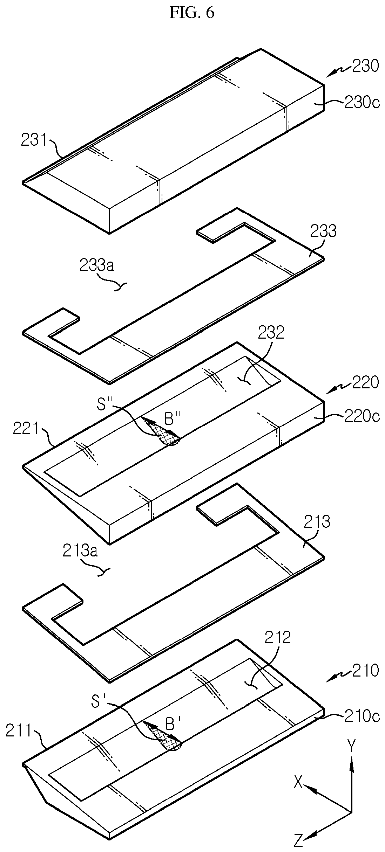

FIG. 5 is a schematic cross-sectional view of a slot die coater according to another embodiment of the present disclosure. FIG. 6 is a schematic exploded perspective view of a slot die coater according to another embodiment of the present disclosure. The slot die coater according to another embodiment of the present disclosure is a dual slot die coater including two slots.

The dual slot die coater 200 according to the present disclosure includes a lower slot 201 and an upper slot 202, and may extrude and apply a coating solution, preferably an electrode active material slurry, on a surface of a continuously traveling substrate 290 through at least one of the lower slot 201 and the upper slot 202. While using both the lower slot 201 and the upper slot 202, the same or different two kinds of electrode active material slurries may be coated simultaneously or alternately on the substrate 290.

In order to manufacture a secondary battery of high energy density, the thickness of the electrode active material layer which was about 130 µm gradually increased to reach 300 µm. When the thick electrode active material layer is formed with the conventional slot die coater, since migration of a binder and a conductive material in the active material slurry deepens during drying, a final electrode is manufactured non-uniformly. In order to solve this problem, when coating is performed two times such as applying thinly and drying the electrode active material layer and then applying and drying the electrode active material layer, a disadvantage is that it takes a long time. In order to simultaneously improve electrode performance and productivity, when the dual slot die coater 200 is used, two types of electrode active material slurries may be simultaneously applied. As such, the dual slot die coater 200 is optimized for application of the electrode active material slurry for manufacturing a secondary battery.

Referring to FIGS. 5 and 6, the dual slot die coater 200 includes a lower die block 210, an intermediate die block 220 disposed on an upper portion of the lower die block 210, and an upper die block 230 disposed on an upper portion of the intermediate die block 220.

In FIG. 5, the dual slot die coater 200 is installed in a substantially horizontal direction (X direction) in which an electrode active material slurry which is a coating solution is discharged (approximately: ± 5 degrees).

The intermediate die block 220 is a block located in the middle of blocks constituting the dual slot die coater 200, and is a block disposed between the lower die block 210 and the upper die block 230 to form a dual slot. A cross section of the intermediate die block 220 of the present embodiment is a right triangle, but is not necessarily limited to such as shape. For example, the cross section may be provided as an isosceles triangle.

A first surface 220a of the intermediate die block 220 facing the upper die block 230 lies almost horizontally, and a surface 230d (that is, a surface forming an upper surface of an outer circumferential surface of the dual slot die coater 200) opposite to a surface 230b of the upper die block 230 facing the first surface 220a also lies almost horizontally. In this way, the first surface 220a and the opposite surface 230d are almost parallel to each other. And a surface 210d (that is, a surface forming a lower surface of the outer circumferential surface of the dual slot die coater 200) opposite to a surface 210b of the lower die block 210 facing the intermediate die block 220 also lies almost horizontally, and this surface is a bottom surface 210d (X-Z plane).

Surfaces of the lower die block 210, the intermediate die block 220, and the upper die block 230 which are opposite to a direction in which the electrode active material slurry is discharged, that is, rear surfaces 210c, 220c, and 230c, lie almost vertically (Y direction).

In a surface forming the outer circumferential surface of the dual slot die coater 200 in the lower die block 210 and the upper die block 230 which are the outermost die blocks, the bottom surface 210d of the lower die block 210 and the upper surface 230d of the upper die block 230 manufactured to be almost vertical to the rear surfaces 210c and 230c may be used. And, the first surface 220a of the intermediate die block 220 manufactured to be almost vertical to the rear surface 220c may be used. In such die blocks 210, 220, and 230, since corners formed by surfaces are formed at right angles, there is a right angle portion in the cross section, and since a vertical or horizontal surface may be used as a reference surface, manufacturing or handling of the die blocks 210, 220, and 230 are easy and the precision thereof is guaranteed. In addition, a state in which the lower die block 210, the intermediate die block 220, and the upper die block 230 are combined has an approximately rectangular parallelepiped shape as a whole, and only a front portion from which the coating solution is discharged is inclined toward the substrate 290. This is advantageous in that a shape after assembly is approximately similar to that of a slot die coater including a single slot (e.g., 100 in FIG. 3) so that a slot die coater stand, etc. may be shared.

The dual slot die coater 200 may further include two or more fixing units 240 provided on the rear surfaces 210c, 220c, and 230c thereof. The fixing units 240 are provided for fastening between the lower die block 210 and the intermediate die block 220 and for fastening between the intermediate die block 220 and the upper die block 230. A plurality of fixing units 240 may be provided in the width direction of the dual slot die coater 200. Bolts are fastened to the fixing units 240, through which the lower die block 210, the intermediate die block 220, and the upper die block 230 are assembled with each other.

The lower die block 210, the intermediate die block 220, and the upper die block 230 are not necessarily limited to shapes of the above examples, and may be configured, for example, as vertical dies with the direction in which the electrode active material slurry is discharged as an upper direction and the rear surfaces 210c, 220c, and 230c as bottom surfaces.

The lower die block 210 is a lowermost block among the blocks constituting the dual slot die coater 200, and the surface 210b facing the intermediate die block 220 has an inclined shape to form an angle of approximately 30 degrees to 60 degrees with respect to the bottom surface.

The lower slot 201 may be formed where the lower die block 210 and the intermediate die block 220 face each other. For example, a lower shim plate 213 is interposed between the lower die block 210 and the intermediate die block 220 to provide a gap therebetween, so that the lower slot 201 corresponding to a passage through which the first coating solution 250 may flow may be formed. That is, the lower shim plate 213 defines the lower slot 201, and in this case, the thickness of the lower shim plate 213 determines the vertical width (Y-axis direction and a slot gap) of the lower slot 201.

The lower shim plate 213 includes a first open portion 213a by cutting one region thereof so that a coating width of the electrode active material layer formed on the substrate 290 is determined and may be interposed in the remaining portion except for one side in an edge region of an opposite surface of each of the lower die block 210 and the intermediate die block 220. Accordingly, a lower discharge port 201a through which the first coating solution 250 may be discharged to the outside is formed only between the lower die lip 211 which is a front end portion of the lower die block 210 and the intermediate die lip 221 which is a front end portion of the intermediate die block 220. The lower discharge port 201a may be formed by making the lower die lip 211 and the intermediate die lip 221 spaced apart from each other.

For reference, the lower shim plate 213 functions as a gasket to prevent the first coating solution 250 from leaking into a gap between the lower die block 210 and the intermediate die block 220 except for the region where the lower discharge port 201a is formed, and thus the lower shim plate 213 is preferably made of a material having sealing property.

The lower die block 210 includes a first manifold 212 having a predetermined depth on the surface 210b facing the intermediate die block 220 and communicatively connected to the lower slot 201. The first manifold 212 is a chamber in the shape of indention. Although not shown in the drawings, the first manifold 212 is connected to a supply chamber (not shown) of the first coating solution 250 installed outside through a supply pipe to receive the first coating solution 250. When the first coating solution 250 is fully filled in the first manifold 212, the flow of the first coating solution 250 is induced along the lower slot 201 and discharged to the outside through the lower discharge port 201a.

Here, a ratio B'/S' of a first manifold length B' (mm) to a first manifold cross-sectional area S' (cm²) preferably in in the range of 1.9 to 9.8. The reason why such a value is preferable is the same as described in the previous embodiment.

The upper die block 230 is disposed to face the first surface 220a which is an upper surface of the intermediate die block 220 that is horizontal with respect to a bottom surface. The upper slot 202 is thus formed where the intermediate die block 220 and the upper die block 230 face to each other.

Like the lower slot 201 described above, a second shim plate 233 may be interposed between the intermediate die block 220 and the upper die block 230 to provide a gap therebetween. Accordingly, the upper slot 202 corresponding to a passage through which a second coating solution 260 may flow is formed. **In** this case, a vertical width (Y-axis direction and a slot gap) of the upper slot 202 is determined by the second shim plate 233.

**In** addition, the second shim plate 233, which also has a structure similar to that of the above-described first shim plate 213, includes a second open portion 233a by cutting one region thereof, and may be interposed in the remaining portion except for one side in an edge region of an opposite surface of each of the intermediate die block 220 and the upper die block 230. Similarly, a circumferential direction of the second shim plate 233 except for the front of the upper slot 202 is blocked, and the upper discharge port 202a is formed only between the front end portion of the intermediate die block 220 and a front end portion of the upper die block 230. The front end portion of the upper die block 230 is defined as the upper die lip 231. **In** other words, the upper discharge port 202a may be formed by making the intermediate die lip 221 and the upper die lip 231 spaced apart from each other. As such, the upper shim plate 233 defines the upper slot 202. The lower shim plate 213 and the upper shim plate 233 determine a coating width of the electrode active material layer applied on the substrate 290 and are aligned with each other in the vertical direction.

**In** addition, the intermediate die block 220 includes a second manifold 232 having a predetermined depth on the surface 220a facing the upper die block 230 and communicatively connected to the upper slot 202. The second manifold 232 is a chamber in the shape of indention. Although not shown in the drawings, the second manifold 232 is connected to a supply chamber of the second coating solution 260 installed outside through a supply pipe to receive the second coating solution 260. When the second coating solution 260 is supplied from the outside along the supply pipe in the shape of a pipe and fully filled in the second manifold 232, the flow of the second coating solution 260 is induced along the upper slot 202 communicatively connected to the second manifold 232 and discharged to the outside through the upper discharge port 202a.

Here, a ratio B"/S" of a second manifold length B" (mm) to a second manifold cross-sectional area S" (cm²) preferably is in the range of 1.9 to 9.8. The reason why such a value is preferable is the same as described in the previous embodiment.

The upper slot 202 and the lower slot 201 form a certain angle, and the angle may be approximately 30 degrees to 60 degrees. The upper slot 202 and the lower slot 201 may intersect each other at one point, and the upper discharge port 202a and the lower discharge port 201a may be provided near the intersection point. Accordingly, discharge points of the first coating solution 250 and the second coating solution 260 may be concentrated approximately at one point. When the angle is approximately 30 degrees to 60 degrees, the electrode active material slurry discharged from the upper discharge port 202a and the electrode active material slurry discharged from the lower discharge port 201a do not form a vortex immediately after being simultaneously discharged. When the vortex is formed, because intermixing occurs, there is a problem in that it is difficult to form a double layer.

**In** a coating method using the dual slot die coater 200, a rotatably provided coating roll 280 is disposed in front of the dual slot die coater 200, the substrate 290 to be coated by rotating the coating roll 280 is driven, a coating solution such as the electrode active material slurry is extruded through at least one of the upper slot 202 and the lower slot 201 to form the electrode active material layer on the substrate 290. The first coating solution 250 and the second coating solution 260 are continuously contacted with the surface of the substrate 290 so that the substrate 290 may be coated in a double layer. Alternatively, supply and interruption of the first coating solution 250 and supply and interruption of the second coating solution 260 are alternately performed so that pattern-coating may be intermittently performed on the substrate 290.

The dual slot die coater 200 according to the present disclosure may form the coating layer, in particular, the electrode active material layer, uniformly at a desired thickness, and preferably may also be manufactured as a dual slot die coater capable of simultaneously coating two types of electrode active material slurries, and thus both performance and productivity are excellent. When the dual slot die coater 200 of the present disclosure is used to manufacture an electrode of a secondary battery by applying the electrode active material slurry on the current collector which is the substrate 290 while driving the current collector, there is an advantage that uniform application is possible even under high-speed traveling or long-width application conditions.

Meanwhile, in the present embodiment, the case of applying the coating solution in two layers or the case of performing pattern-coating by alternately supplying the coating solution has been described as an example, but it will be understood without separate explanation that it is also applied to the case where three or more layers are simultaneously applied by providing three or more slots.

**In** addition, a modified example in which the intermediate die block 220 includes a first intermediate die block and a second intermediate die block, and the first intermediate die block and the second intermediate die block are in face-to-face contact with each other up and down, but are provided to slide along a contact surface to be relatively movable is also possible. **In** such a modified example, a total of four die blocks are included.

The first intermediate die block is fixedly coupled to the lower die block 210 by bolt coupling, etc., and the second intermediate die block is fixedly coupled to the upper die block 230 by bolt coupling, etc. Accordingly, the first intermediate die block and the lower die block 210 may move integrally, and the second intermediate die block and the upper die block 230 may move integrally.

According to the modified example, the upper and lower discharge ports 101a and 102a may be spaced apart from each other in a horizontal direction to be arranged back and forth. A separate apparatus is used, or an operator may make the relative movement of the lower die block 110 and the upper die block 130 by hand. For example, in a state where the lower die block 110 does not move and is left as it is, a step between the lower discharge port 101a and the upper discharge port 102a may be formed by moving the upper die block 130 along a sliding surface backward which is opposite to a discharge direction of the coating solution or forward which is the discharge direction. Here, the sliding surface means an opposite surface of the first intermediate die block and the second intermediate die block.

The width of the step formed as described above may be determined within the range of approximately several hundred micrometers to several millimeters, which may be determined according to the physical properties and viscosity of the first coating solution 250 and the second coating solution 260 formed on the substrate 290, or a desired thickness for each layer on the substrate 290. For example, as the thickness of a coating layer to be formed on the substrate 290 increases, a numerical value of the width of the step may increase.

**In** addition, as the lower discharge port 101a and the upper discharge port 102a are arranged at positions spaced apart from each other in the horizontal direction, there is no concern that the second coating solution 260 discharged from the upper discharge port 102a flows into the lower discharge port 101a or the first coating solution 250 discharged from the lower discharge port 101a flows into the upper discharge port 102a.

That is, there is no concern that the coating solution discharged through the lower discharge port 101a or the upper discharge port 102a is blocked by a surface forming the step formed between the lower discharge port 101a and the upper discharge port 102a and flows into the other discharge port, whereby a more smooth multi-layer active material coating process may proceed.

The dual slot die coater according to the modified example of the present disclosure as described above may be adjusted simply by the sliding movement of the lower die block 110 and/or the upper die block 130, in a case where the relative position between the lower discharge port 101a and the upper discharge port 102a needs to be changed, and there is no need to disassemble and reassemble each of the die blocks 110, 120, and 130, and thus process ability may be greatly improved.

Hereinafter, results of changing the land length A, the manifold length B, and the manifold cross-sectional area S in the slot die coater 100 as shown in FIG. 2 and confirming the stagnation speed and the flow rate deviation through simulation will be described in detail.

The analysis assumed the case of a negative electrode active material slurry in which artificial graphite: natural graphite: conductive material: thickener (CMC): binder (SBR) are 85.1: 9.5: 1: 1.5: 3. The negative electrode active material slurry has a density of 1.35 kg/m³ and a solid content of 48%. As coating conditions, loading after drying was 10.6 mg/cm², a coating speed was 80 m/min, a shim plate thickness was 1 mm, and a coating width was 1040 mm.

The case where the land length is 38, 45, and 50 to 88 mm (increase by 1 mm) was simulated. The case where the manifold length is 49, 49.6, 50.3, 50.9, 51, 51.5, 52, 52.1, 52.8, 53.1, 53.4, 54, 54.8, 54.9, 56.8, 57.4, 57.7, and 58.6 mm was simulated. The manifold width was fixed at 1080 mm. The manifold cross-sectional area was determined within the range of 4 to 54 cm².

As a result of the simulation, when the manifold length is fixed and the land length is changed, the flow rate deviation tended to decrease as the land length increases. When the manifold length is fixed and the land length increases, the average residence time tended to be shortened. When the land length is fixed and the manifold length is changed, the flow rate deviation tended to decrease as the manifold length increases. It was confirmed that the average residence time increases when the land length is fixed and the manifold length increases. It has been found that the ratio of manifold length to manifold cross-sectional area is controlled as a parameter so as to achieve desired degree of the average residence time and the flow rate deviation.

As a result of checking the ratio B/S of the manifold length B to the manifold cross-sectional area S with respect to all simulation condition combinations, it was confirmed that the average residence time gradually increased as this ratio increases. The shorter the average residence time, the better, but since there is no critical point for minimizing the average residence time, in the case where the average residence time is equal to or less than 200 seconds, the flow rate deviation at that time was further considered.

The following Tables 1 and 2 summarize the average residence time and the flow rate deviation according to changes in the manifold length and the manifold cross-sectional area in a state where the land length is fixed to 50 mm and the manifold length to 54 mm among the above simulation results. The average residence time and the flow rate deviation are arranged in descending order of S/B.

**[Table 1]**

| | Manifold length B (mm) | Manifold cross-sectional area S (cm²) | S/B | Average residence time (sec) | Flow rate deviation (%) |
|---|---|---|---|---|---|
| Comparative Example | 54 | 4 | 13.5 | 15.58 | 39.73 |
| Comparative Example | 54 | 4.5 | 12.0 | 18.17 | 30.89 |
| Comparative Example | 54 | 5 | 10.8 | 20.85 | 24.66 |
| Embodiment | 54 | 5.5 | 9.8 | 23.61 | 20.12 |
| Embodiment | 54 | 6 | 9.0 | 26.44 | 16.71 |
| Embodiment | 54 | 6.5 | 8.3 | 29.35 | 14.08 |
| Embodiment | 54 | 7 | 7.7 | 32.33 | 12.02 |
| Embodiment | 54 | 7.5 | 7.2 | 35.38 | 10.37 |
| Embodiment | 54 | 8 | 6.8 | 38.48 | 9.03 |
| Embodiment | 54 | 9 | 6.0 | 44.87 | 7.02 |
| Embodiment | 54 | 10 | 5.4 | 51.49 | 5.61 |
| Embodiment | 54 | 11 | 4.9 | 58.3 | 4.57 |
| Embodiment | 54 | 12 | 4.5 | 65.31 | 3.8 |
| Embodiment | 54 | 12.8 | 4.2 | 71.05 | 3.31 |
| Embodiment | 54 | 13 | 4.2 | 72.5 | 3.2 |
| Embodiment | 54 | 14 | 3.9 | 79.85 | 2.73 |
| Embodiment | 54 | 15 | 3.6 | 87.37 | 2.36 |
| Embodiment | 54 | 16 | 3.4 | 95.05 | 2.05 |
| Embodiment | 54 | 17 | 3.2 | 102.87 | 1.8 |
| Embodiment | 54 | 17.2 | 3.1 | 104.45 | 1.76 |
| Embodiment | 54 | 18 | 3.0 | 110.83 | 1.6 |

**[Table 2]**

| | Manifold length B (mm) | Manifold cross-sectional area S (cm²) | S/B | Average residence time (sec) | Flow rate deviation (%) |
|---|---|---|---|---|---|
| Embodiment | 54 | 18.1 | 3.0 | 111.64 | 1.58 |
| Embodiment | 54 | 19 | 2.8 | 118.93 | 1.42 |
| Embodiment | 54 | 20 | 2.7 | 127.16 | 1.27 |
| Embodiment | 54 | 21 | 2.6 | 135.52 | 1.15 |
| Embodiment | 54 | 22 | 2.5 | 143.99 | 1.04 |
| Embodiment | 54 | 23 | 2.3 | 152.59 | 0.95 |
| Embodiment | 54 | 24 | 2.3 | 161.3 | 0.86 |
| Embodiment | 54 | 25 | 2.2 | 170.12 | 0.79 |
| Embodiment | 54 | 26 | 2.1 | 179.05 | 0.73 |
| Embodiment | 54 | 26.5 | 2.0 | 183.56 | 0.7 |
| Embodiment | 54 | 27 | 2.0 | 188.09 | 0.67 |
| Embodiment | 54 | 28 | 1.9 | 197.22 | 0.62 |
| Comparative Example | 54 | 29 | 1.9 | 206.46 | 0.58 |
| Comparative Example | 54 | 31 | 1.7 | 225.23 | 0.5 |
| Comparative Example | 54 | 33 | 1.6 | 244.36 | 0.44 |
| Comparative Example | 54 | 35 | 1.5 | 263.86 | 0.39 |
| Comparative Example | 54 | 40 | 1.4 | 314.06 | 0.29 |
| Comparative Example | 54 | 45 | 1.2 | 366.22 | 0.23 |
| Comparative Example | 54 | 50 | 1.1 | 420.17 | 0.18 |
| Comparative Example | 54 | 54 | 1.0 | 464.54 | 0.15 |

Referring to Tables 1 and 2, the average residence time increases as the ratio B/S of the manifold length B to the manifold cross-sectional area S increases, but the condition that the flow rate deviation is less than 20% when the ratio B/S of the manifold length B to the manifold cross-sectional area S is within a predetermined range. Tables 1 and 2 show the case where the land length + the manifold length is 104 mm, where when the B/S is 1.9 to 9.8, the flow rate deviation is less than 20% and the average residence time is equal to or less than 200 seconds.

As can be seen from these simulations, when the B/S is 1.9 to 9.8 as proposed in the present disclosure, the flow rate deviation may be less than 20% and the average residence time may be equal to or less than 200 seconds. Within the size range of the slot die coater considering the current collector size currently available for manufacturing the secondary battery, if the B/S satisfies the range of 1.9 to 9.8, it is possible to design a die block having the flow rate deviation generally less than 20% and the average residence time equal to or less than 200 seconds. The flow rate deviation and average residence time presented here are process conditions such as characteristics and coating speed of the electrode active material slurry currently used for manufacturing the secondary battery and appropriate conditions for indicating almost uniform flow of coating solution, such as within the size range of a slot die coater. If another condition changes, such as the land length changes, in the simulation conditions, the flow rate deviation and average residence time may vary, but as long as the B/S is within the range of 1.9 to 9.8, the current problem of improving fluidity in a coating process for manufacturing the secondary battery may be sufficiently solved.

As proposed in the present disclosure, it was confirmed that when the ratio of the manifold length to the manifold cross-sectional area satisfies a predetermined range, the average residence time and flow rate deviation may be managed at appropriate values, and thus fluidity may be significantly improved compared to the prior art.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A method of coating a current collector with an electrode active material slurry, wherein the method implements a slot die coater (100) comprising:
• at least two die blocks (110, 130);
• a shim plate (113) provided between the two die blocks (110, 130) to form a slot (101); and
• a manifold (112) provided in the die block (110, 130) and communicatively connected with the slot (101) as a chamber in a shape of indention accommodating a coating solution (150),
wherein the coating solution (150) is discharged and applied to a surface of a continuously traveling substrate (190) through a discharge port (101a) communicatively connected with the slot (101),
**characterized in that** a flow rate deviation, which is a difference between maximum and minimum values of a flow rate measured along a width direction of the slot die coater, is adjusted to less than 20% and an average residence time is adjusted to be equal to or less than 200 seconds by determining a ratio B/S of a manifold length B mm to a manifold cross-sectional area S cm² in a cross section along a traveling direction of the substrate (190) in a range of 1.9 to 9.8 mm/cm².

2. The method of claim 1, wherein the slot die coater (100) is such that a die block size which is a length from a die lip which is a front end of the die block (110, 130) to a rear surface of the die block (110, 130) is equal to or less than 350 mm.

3. A method of coating a current collector with an electrode active material slurry, wherein the method implements a slot die coater (200) comprising:
• a lower die block (210);
• an intermediate die block (220) disposed on an upper portion of the lower die block (210) to form a lower slot (201) therebetween; and
• an upper die block (230) disposed on an upper portion of the intermediate die block (220) to form an upper slot (202) therebetween,
• a first manifold (212) provided in the lower die block (210) and communicatively connected with the lower slot (201) as a chamber in a shape of indention accommodating a first coating solution (250); and
• a second manifold (232) provided in the intermediate die block (220) and communicatively connected with the upper slot (202) as a chamber in a shape of indention accommodating a second coating solution (260),
wherein the coating solution (250, 260) is discharged and applied to a surface of a continuously traveling substrate (290) through a discharge port (201a, 202a) communicatively connected with the slot,
**characterized in that** a flow rate deviation, which is a difference between maximum and minimum values of a flow rate measured along a width direction of the slot die coater, is adjusted to less than 20% and an average residence time is adjusted to be equal to or less than 200 seconds by determining, in a cross section perpendicular to a width direction of the slot die coater (200), a ratio B'/S' of a first manifold length B' mm to a first manifold cross-sectional area S' cm² in a range of 1.9 to 9.8, or a ratio B"/S" of a second manifold length B" mm to a second manifold cross-sectional area S" cm² a in a range of 1.9 to 9.8 mm/cm².

4. The method of claim 3, wherein the slot die coater (200) discharges and applies an electrode active material slurry to a surface of a continuously traveling substrate (290),through at least one of the lower slot (201) and the upper slot (202), the slot die coater (200) is installed such that a direction in which the electrode active material slurry is discharged lies almost horizontally, and surfaces of the lower die block (210), the intermediate die block (220), and the upper die block (230) opposite to the direction in which the electrode active material slurry is discharged lie almost vertically.

5. The method of claim 3, wherein the slot die coater (200) is such that a tangential plane of the intermediate die block (220) and the upper die block (230) is parallel to a horizontal plane.

6. The method of claim 3, wherein the slot die coater (200) is such that the lower slot (201) and the upper slot (202) form an angle of 30 to 60 degrees.

7. The method of claim 3, wherein the slot die coater (200) discharges and applies an electrode active material slurry to a surface of a continuously traveling substrate (290) through at least one of the lower slot (201) and the upper slot (202),
wherein the slot die coater (200) further comprises:
a lower shim plate (213) configured to define the lower slot (201); and
an upper shim plate (233) configured to define the upper slot (202),
wherein each of the lower shim plate (213) and the upper shim plate (233) comprises an open portion by cutting one region thereof so that a coating width of an electrode active material layer formed on the substrate (290) is determined, and
wherein the lower shim plate (213) and the upper shim plate (233) are aligned with each other in an up and down direction.

8. The method of claim 3, wherein the slot die coater (200) is such that the intermediate die block (220) comprises a first intermediate die block and a second intermediate die block,
wherein the first intermediate die block and the second intermediate die block are in face-to-face contact with each other up and down and slide along a contact surface to be movable relative to each other.

9. The method of claim 8, wherein the slot die coater (200) is such that the first intermediate die block is fixedly coupled to the lower die block by bolt coupling, and the second intermediate die block is fixedly coupled to the upper die block by bolt coupling so that the first intermediate die block and the lower die block move integrally, and the second intermediate die block and the upper die block move integrally.

10. The method claim 8, wherein the slot die coater (200) is such that a step is formed between the lower discharge port (201a) and the upper discharge port (202a).

11. The method of claim 3, wherein the slot die coater (200) discharges and applies an electrode active material slurry to a surface of a continuously traveling substrate (290) through at least one of the lower slot (201) and the upper slot (202), and a direction in which the electrode active material slurry is discharged is a direction opposite to gravity.

## Patentansprüche

1. Verfahren eines Beschichtens eines Stromkollektors mit einem Elektrodenaktivmaterialslurry, wobei das Verfahren einen Schlitzdüsenbeschichter (100) implementiert, welcher umfasst:
- wenigstens zwei Düsenblöcke (110, 130);
- eine Einlegeplatte (113), welche zwischen den zwei Düsenblöcken (110, 130) bereitgestellt ist, um einen Schlitz (101) zu bilden; und
- einen Verteiler (112), welcher in dem Düsenblock (110, 130) bereitgestellt und kommunikativ mit dem Schlitz (101) als eine Kammer in einer Form einer Einrückung verbunden ist, welche eine Beschichtungslösung (150) fasst,
wobei die Beschichtungslösung (150) auf eine Fläche eines sich kontinuierlich fortbewegenden Substrats (190) durch eine Auslassmündung (101a) ausgelassen und aufgebracht wird, welche kommunikativ mit dem Schlitz (101) verbunden ist,
**dadurch gekennzeichnet, dass** eine Strömungsratenabweichung, welche ein Unterschied zwischen maximalen und minimalen Werten einer Strömungsrate ist, welche entlang einer Breitenrichtung des Schlitzdüsenbeschichters gemessen wird, auf weniger als 20% angepasst wird und eine mittlere Verweilzeit angepasst wird, um gleich wie oder weniger als 200 Sekunden zu sein durch ein Bestimmen eines Verhältnisses B/S einer Verteilerlänge B mm zu einer Verteilerquerschnittsfläche S cm² in einem Querschnitt entlang einer Fortbewegungsrichtung des Substrats (190) in einem Bereich von 1,9 bis 9,8 mm/cm².

2. Verfahren nach Anspruch 1, wobei der Schlitzdüsenbeschichter (100) derart gebildet ist, dass eine Düsenblockgröße, welche eine Länge von einem Düsenrand, welcher ein vorderes Ende des Düsenblocks (110, 130) ist, zu einer hinteren Fläche des Düsenblocks (110, 130) ist, gleich wie oder weniger als 350 mm ist.

3. Verfahren eines Beschichtens eines Stromkollektors mit einem Elektrodenaktivmaterialslurry, wobei das Verfahren einen Schlitzdüsenbeschichter (200) implementiert, welcher umfasst:
- einen unteren Düsenblock (210);
- einen mittleren Düsenblock (220), welcher an einem oberen Abschnitt des unteren Düsenblocks (210) angeordnet ist, um einen unteren Schlitz (201) dazwischen zu bilden; und
- einen oberen Düsenblock (230), welcher an einem oberen Abschnitt des mittleren Düsenblocks (220) angeordnet ist, um einen oberen Schlitz (202) dazwischen zu bilden,
- einen ersten Verteiler (212), welcher in dem unteren Düsenblock (210) bereitgestellt und kommunikativ mit dem unteren Schlitz (201) als eine Kammer in einer Form einer Einrückung verbunden ist, welche eine erste Beschichtungslösung (250) fasst; und
- einen zweiten Verteiler (232), welcher in dem mittleren Düsenblock (220) bereitgestellt und kommunikativ mit dem oberen Schlitz (202) als eine Kammer in einer Form einer Einrückung verbunden ist, welche eine zweite Beschichtungslösung (260) fasst,
wobei die Beschichtungslösung (250, 260) auf eine Fläche eines sich kontinuierlich fortbewegenden Substrats (290) durch eine Auslassmündung (201a, 202a) ausgelassen und aufgebracht wird, welche kommunikativ mit dem Schlitz verbunden ist,
**dadurch gekennzeichnet, dass** eine Strömungsratenabweichung, welche ein Unterschied zwischen maximalen und minimalen Werten einer Strömungsrate ist, welche entlang einer Breitenrichtung des Schlitzdüsenbeschichters gemessen wird, auf weniger als 20% angepasst wird und eine mittlere Verweilzeit angepasst wird, um gleich wie oder weniger als 200 Sekunden zu sein durch ein Bestimmen, in einem Querschnitt senkrecht zu einer Breitenrichtung des Schlitzdüsenbeschichters (200), eines Verhältnisses B'/S' einer ersten Verteilerlänge B' mm zu einer ersten Verteilerquerschnittsfläche S' cm² in einem Bereich von 1,9 bis 9,8 oder eines Verhältnisses B"/S" einer zweiten Verteilerlänge B" mm zu einer zweiten Verteilerquerschnittsfläche S" cm² in einem Bereich von 1,9 bis 9,8 mm/cm².

4. Verfahren nach Anspruch 3, wobei der Schlitzdüsenbeschichter (200) ein Elektrodenaktivmaterialslurry auf eine Fläche eines sich kontinuierlich fortbewegenden Substrats (290) durch wenigstens einen von dem unteren Schlitz (201) und dem oberen Schlitz (202) auslässt und aufbringt, wobei der Schlitzdüsenbeschichter (200) installiert ist, sodass eine Richtung, in welche das Elektrodenaktivmaterialslurry ausgelassen wird, fast horizontal liegt, und Flächen des unteren Düsenblocks (210), des mittleren Düsenblocks (220) und des oberen Düsenblocks (230) entgegengesetzt zu der Richtung, in welche das Elektrodenaktivmaterialslurry ausgelassen wird, fast vertikal liegen.

5. Verfahren nach Anspruch 3, wobei der Schlitzdüsenbeschichter (200) derart gebildet ist, dass eine tangentiale Ebene des mittleren Düsenblocks (220) und des oberen Düsenblocks (230) parallel zu einer horizontalen Ebene ist.

6. Verfahren nach Anspruch 3, wobei der Schlitzdüsenbeschichter (200) derart gebildet ist, dass der untere Schlitz (201) und der obere Schlitz (202) einen Winkel von 30 bis 60 Grad bilden.

7. Verfahren nach Anspruch 3, wobei der Schlitzdüsenbeschichter (200) ein Elektrodenaktivmaterialslurry auf eine Fläche eines sich kontinuierlich fortbewegenden Substrats (290) durch wenigstens einen von dem unteren Schlitz (201) und dem oberen Schlitz (202) auslässt und aufbringt,
wobei der Schlitzdüsenbeschichter (200) ferner umfasst:
eine untere Einlegeplatte (213), welche dazu eingerichtet ist, den unteren Schlitz (201) zu definieren; und
eine obere Einlegeplatte (233), welche dazu eingerichtet ist, den oberen Schlitz (202) zu definieren,
wobei jede von der unteren Einlegeplatte (213) und der oberen Einlegeplatte (233) einen offenen Abschnitt umfasst durch ein derartiges Schneiden eines Bereichs davon, dass eine Beschichtungsbreite einer Elektrodenaktivmaterialschicht bestimmt ist, welche auf dem Substrat (290) gebildet wird, und
wobei die untere Einlegeplatte (213) und die obere Einlegeplatte (233) in einer oberen und unteren Richtung miteinander ausgerichtet sind.

8. Verfahren nach Anspruch 3, wobei der Schlitzdüsenbeschichter (200) derart gebildet ist, dass der mittlere Düsenblock (220) einen ersten mittleren Düsenblock und einen zweiten mittleren Düsenblock umfasst,
wobei der erste mittlere Düsenblock und der zweite mittlere Düsenblock nach oben und unten in einander zugewandtem Kontakt miteinander stehen und entlang einer Kontaktfläche gleiten, um relativ zueinander bewegbar zu sein.

9. Verfahren nach Anspruch 8, wobei der Schlitzdüsenbeschichter (200) derart gebildet ist, dass der erste mittlere Düsenblock durch eine Bolzenkopplung fest mit dem unteren Düsenblock gekoppelt ist und der zweite mittlere Düsenblock durch eine Bolzenkopplung fest mit dem oberen Düsenblock gekoppelt ist, sodass der erste mittlere Düsenblock und der untere Düsenblock sich integral bewegen und der zweite mittlere Düsenblock und der obere Düsenblock sich integral bewegen.

10. Verfahren nach Anspruch 8, wobei der Schlitzdüsenbeschichter (200) derart gebildet ist, dass eine Stufe zwischen der unteren Auslassmündung (201a) und der oberen Auslassmündung (202a) gebildet ist.

11. Verfahren nach Anspruch 3, wobei der Schlitzdüsenbeschichter (200) ein Elektrodenaktivmaterialslurry auf eine Fläche eines sich kontinuierlich fortbewegenden Substrats (290) durch wenigstens einen von dem unteren Schlitz (201) und dem oberen Schlitz (202) auslässt und aufbringt und eine Richtung, in welche das Elektrodenaktivmaterialslurry ausgelassen wird eine Richtung entgegengesetzt zur Gravitation ist.

## Revendications

1. Procédé d'enduction d'un collecteur de courant avec une suspension de matériaux actifs d'électrode, dans lequel le procédé met en œuvre un dispositif d'enduction à filière plate (100) comprenant :
• au moins deux blocs de filière (110, 130) ;
• une plaque de cale (113) prévue entre les deux blocs de filière (110, 130) pour former une fente (101) ; et
• un distributeur (112) prévu dans le bloc de filière (110, 130) et relié de manière communicante à la fente (101) sous l'aspect d'une chambre en forme de creux recevant une solution d'enduction (150),
dans lequel la solution d'enduction (150) est évacuée et appliquée sur une surface d'un substrat (190) se déplaçant en continu à travers un orifice d'évacuation (101a) relié de manière communicante à la fente (101),
**caractérisé en ce qu'**un écart de débit, qui est une différence entre des valeurs maximale et minimale d'un débit mesuré le long d'une direction de largeur du dispositif d'enduction à filière plate, est ajusté à moins de 20 % et un temps de séjour moyen est ajusté pour être égal ou inférieur à 200 secondes en déterminant un rapport B/S d'une longueur de distributeur de B mm sur une superficie en coupe transversale de distributeur de S cm² dans une coupe transversale le long d'une direction de déplacement du substrat (190) dans une plage de 1,9 à 9,8 mm/cm².

2. Procédé selon la revendication 1, dans lequel le dispositif d'enduction à filière plate (100) est tel qu'une taille de bloc de filière qui est une longueur depuis une lèvre de filière qui est une extrémité avant du bloc de filière (110, 130) jusqu'à une surface arrière du bloc de filière (110, 130) est égale ou inférieure à 350 mm.

3. Procédé d'enduction d'un collecteur de courant avec une suspension de matériaux actifs d'électrode, dans lequel le procédé met en œuvre un dispositif d'enduction à filière plate (200) comprenant :
• un bloc de filière inférieur (210) ;
• un bloc de filière intermédiaire (220) disposé sur une partie supérieure du bloc de filière inférieur (210) pour former une fente inférieure (201) entre ceux-ci ; et
• un bloc de filière supérieur (230) sur une partie supérieure du bloc de filière intermédiaire (220) pour former une fente supérieure (202) entre ceux-ci,
• un premier distributeur (212) prévu dans le bloc de filière inférieur (210) et relié de manière communicante à la fente inférieure (201) sous l'aspect d'une chambre en forme de creux recevant une première solution d'enduction (250) ; et
• un second distributeur (232) prévu dans le bloc de filière intermédiaire (220) et relié de manière communicante à la fente supérieure (202) sous l'aspect d'une chambre en forme de creux recevant une seconde solution d'enduction (260),
dans lequel la solution d'enduction (250, 260) est évacuée et appliquée sur la surface d'un substrat (290) se déplaçant en continu à travers un orifice d'évacuation (201a, 202a) relié de manière communicante à la fente,
**caractérisé en ce qu'**un écart de débit, qui est une différence entre des valeurs maximale et minimale d'un débit mesuré le long d'une direction de largeur du dispositif d'enduction à filière plate, est ajusté à moins de 20 % et un temps de séjour moyen est ajusté pour être égal ou inférieur à 200 secondes en déterminant, dans une coupe transversale perpendiculaire à une direction de largeur du dispositif d'enduction à filière plate (200), un rapport B'/S' d'une première longueur de distributeur de B' mm sur une première superficie en coupe transversale de distributeur de S' cm² dans une plage de 1,9 à 9,8, ou un rapport B"/S" d'une seconde longueur de distributeur de B" mm sur une seconde superficie en coupe transversale de distributeur de S" cm² dans une plage de 1,9 à 9,8 mm/cm².

4. Procédé selon la revendication 3, dans lequel le dispositif d'enduction à filière plate (200) évacue et applique une suspension de matériaux actifs d'électrode sur une surface d'un substrat (290) se déplaçant en continu, à travers au moins une parmi la fente inférieure (201) et la fente supérieure (202), le dispositif d'enduction à filière plate (200) est installé de sorte qu'une direction dans laquelle la suspension de matériaux actifs d'électrode est évacuée se trouve presque à l'horizontale, et des surfaces du bloc de filière inférieur (210), du bloc de filière intermédiaire (220) et du bloc de filière supérieur (230) opposées à la direction dans laquelle la suspension de matériaux actifs d'électrode est évacuée se trouvent presque à la verticale.

5. Procédé selon la revendication 3, dans lequel le dispositif d'enduction à filière plate (200) est tel qu'un plan tangentiel du bloc de filière intermédiaire (220) et du bloc de filière supérieur (230) est parallèle à un plan horizontal.

6. Procédé selon la revendication 3, dans lequel le dispositif d'enduction à filière plate (200) est tel que la fente inférieure (201) et la fente supérieure (202) forment un angle de 30 à 60 degrés.

7. Procédé selon la revendication 3, dans lequel le dispositif d'enduction à filière plate (200) évacue et applique une suspension de matériau actif d'électrode sur une surface d'un substrat (290) se déplaçant en continu à travers au moins une parmi la fente inférieure (201) et la fente supérieure (202),
dans lequel le dispositif d'enduction à filière plate (200) comprend en outre :
une plaque de cale inférieure (213) configurée pour définir la fente inférieure (201) ; et
une plaque de cale supérieure (233) configurée pour définir la fente supérieure (202),
dans lequel chacune de la plaque de cale inférieure (213) et la plaque de cale supérieure (233) comprend une partie ouverte en coupant une région de celle-ci de sorte qu'une largeur de revêtement d'une couche de matériaux actifs d'électrode formée sur le substrat (290) soit déterminée, et
dans lequel la plaque de cale inférieure (213) et la plaque de cale supérieure (233) sont alignées l'une sur l'autre dans une direction haut-bas.

8. Procédé selon la revendication 3, dans lequel le dispositif d'enduction à filière plate (200) est tel que le bloc de filière intermédiaire (220) comprend un premier bloc de filière intermédiaire et un second bloc de filière intermédiaire,
dans lequel le premier bloc de filière intermédiaire et le second bloc de filière intermédiaire sont en contact face à face l'un avec l'autre vers le haut et le bas et coulissent le long d'une surface de contact pour être mobiles l'un par rapport à l'autre.

9. Procédé selon la revendication 8, dans lequel le dispositif d'enduction à filière plate (200) est tel que le premier bloc de filière intermédiaire est accouplé de manière fixe au bloc de filière inférieur par un accouplement par boulon, et le second bloc de filière intermédiaire est accouplé de manière fixe au bloc de filière supérieur par un accouplement par boulon de façon à ce que le premier bloc de filière intermédiaire et le bloc de filière inférieur bougent d'un seul tenant, et le second bloc de filière intermédiaire et le bloc de filière supérieur bougent d'un seul tenant.

10. Procédé selon la revendication 8, dans lequel le dispositif d'enduction à filière plate (200) est tel qu'une marche est formée entre l'orifice d'évacuation inférieur (201a) et l'orifice d'évacuation supérieur (202a).

11. Procédé selon la revendication 3, dans lequel le dispositif d'enduction à filière plate (200) évacue et applique une suspension de matériaux actifs d'électrode sur une surface d'un substrat (290) se déplaçant en continu à travers au moins une parmi la fente inférieure (201) et la fente supérieure (202), et une direction dans laquelle la suspension de matériaux actifs d'électrode est évacuée est une direction opposée à la gravité.
